Europäisches Patentamt

European Patent Office

Office européen des brevets

(19)

(11) Publication number: **0 265 696**

**A1**

(12) **EUROPEAN PATENT APPLICATION**

(21) Application number: **87114291.5**

(22) Date of filing: **30.09.87**

(51) Int. Cl.⁴: **C08J 3/18 , A63B 21/18**

(30) Priority: **01.10.86 US 913921**

(43) Date of publication of application:
**04.05.88 Bulletin 88/18**

(84) Designated Contracting States:
**BE CH DE ES FR GB IT LI NL SE**

(71) Applicant: **SPENCO MEDICAL CORPORATION**
**7501 Bosque Boulevard**
**Waco Texas 76710(US)**

(72) Inventor: **Orchard, Lewis Preole, III**
**635 Falcon Drive**
**Waco Texas 76710(US)**
Inventor: **Gardiner, Peter**
**2303 Southeast Tenth Street**
**Mineral Wells Texas 76067(US)**

(74) Representative: **DIEHL GLAESER HILTL &**
**PARTNER**
**Patentanwälte Flüggenstrasse 13**
**D-8000 München 19(DE)**

(54) **Viscoelastic composition and viscoelastic weight.**

(57) A viscoelastic composition is disclosed, made of a particulate weight-adding agent dispersed within a viscoelastic material. The composition is formed of at least about 85% plasticizer and particulate weight-adding agent, and the ratio of weight-adding agent to plasticizer of at least about 3:1. A viscoelastic or soft weight is formed by said composition.

EP 0 265 696 A1

Xerox Copy Centre

## VISCOELASTIC COMPOSITION AND VISCOELASTIC WEIGHT

### Background of the Invention

This invention relates to exercise weights, and more particularly to materials used in making soft viscoelastic exercise weights.

For various reasons, it is often desirable to have weight added to the body during physical activity. Such activity may be a part of a program or physical rehabilitation for injured persons, or a health-maintaining daily exercise program such as jogging or aerobic dancing. During the exercise movement, the added weight increases the work accomplished, increasing caloric consumption and causing more rapid or additional muscle development and other coordinated health benefits.

In the past, it has been known to attach a variety of weights to the body by various means. One type weight is disclosed in copending patent application U.S. Serial Number 718,924 filed April 2, 1985. This application discloses a weight comprising a viscoelastic material which includes 77-97% plasticizer, 3-15% resin, 0-2% thixotropic thickening agent, 0-2% stabilizer, 0-2% stabilizer, 0-2% stabilizer enhancer and 0-2% surfactant, and a particulate weight-adding agent in a ratio of from 1:10 to 2:1 weight-adding agent to viscoelastic material and having a specific gravity of about 1.6.

The invention intends to provide a viscoelastic composition. This object is solved by the viscoelastic composition of claim 1. Further advantageous features of this composition are evident from the dependent claims. The invention also intends to provide a viscoelastic weight. This object is solved by the weight of claim 11. Further advantageous details of this weight are evident from the dependent claims.

The invention provides a novel composition for a viscoelastic weight which has increased loading capacity and improved softness, and comprises at least about 85% plasticizer and weight-adding agent, the ratio of weight-adding agent to plasticizer being at least about 3:1. Preferably the composition comprises about 15 to about 45% plasticizer, about 2 to about 4% resin, about 0.03 to about 1% thickening agent, about 0.1 to about 0.25% stabilizer, about 0.1 to about 0.25% stabilizer enhancer, about 0 to about 2% surfactant, about 40 to about 80% particulate weight adding agent, about 0.3 to about 0.6% coupling agent, about 2 to about 4% monomer and about 0.001 to about 0.08% monomer catalyst. The weight of this invention has a specific gravity of at least about 2.3.

The product of the present invention may be formed into various shapes. The presently preferred embodiment is a generally annular shaped weight made from a core weighing from about 0.2268 to about 0.9072 kg (1/2 to about 2 pounds). The weighted viscoelastic core may be covered by a stretchy, absorbent material, such as terry cloth. The weight is stretchy enough so that the hole in the center of the annular core can be expanded to slide over a hand or foot, and is elastic enough so that the weight remains in place on the adjoining wrist or ankle during exercise movements.

One advantage of the viscoelastic weight of the present invention is that it is soft and will not bruise flesh which it might inadvertently strike. The material from which the weight is made is very flexible, and thus reduces the shock caused by sudden changes in speed or direction of the weight during exercise movements. The viscoelastic nature of the weight, combined with the covering, results in a weight which does not chafe the skin. The viscoelastic material used also is durable and may be repeatably stretched and used without disintegrating. In the preferred embodiment of a wrist weight, the weight is placed easily on the wrist and requires no fastener.

### In the following preferred embodiments will be described:

The weight of this invention is made of a viscoelastic material which includes a particulate weight-adding agent dispersed within the viscoelastic material. In the preferred embodiment, the weight has a specified gravity of approximately 2.3.

The weighted viscoelastic material is stretchy enough so that an annular weight having a 3.81 cm (1-1/2 inch) diameter hole can expand to fit over a hand or foot. The elasticity of the material causes the hole to contract gently around the wrist or ankle once the weight is in place. The weight stays in place during exercise movements.

The novel product and composition of the present invention has numerous advantages in addition to those previously described. The weights can be warmed before use in cold weather, or cooled before use in warm weather. The novel composition will not go brittle when cooled, even down to -17.8°C (0°F ) and beyond. The annular shaped devices may be secured on the wrists or ankles without fasteners, making the device simple to put on and leaving the hands free during exercise maneuvers. The absorbent covering of the preferred embodiment can be used as a sweat band.

The product of the present invention is advantageous over the lead shot containing hand exerciser because the weight-adding agent is in particulate form and does not cut into the viscoelastic matrix during use. Also, by incorporating the weight-adding agent in particulate form, higher loading is possible making a more uniformly dense product, and the resulting weighted viscoelastic core is stronger than a core containing a cavity. It has also been discovered that the use of barium sulfate increases the strength of the resulting weighted viscoelastic material over that of unweighted viscoelastic material of an otherwise similar composition.

In general, the term viscoelastic refers to soft, incompressible, elastic materials which are able to deform under slight pressure and resume their original shape when the pressure is removed. In particular, the preferred viscoelastic material described herein can be characterized as either a highly plasticized resin or a plasticizing material thickened with a minor portion of resin. Other less preferred viscoelastic materials include silicones and urethanes.

The viscoelastic material must be soft, nonabrasive and yield a high elongation (strain), preferably at least 150%, more preferably at least 165%, for a relatively low force (stress), preferably not in excess of 0.9072 kg (2 pounds). This is desirable for increased comfort and to minimize skin breakdown and/or circulatory problems. High strain increases the ability to accommodate a wide range of body sizes. Also, it must be nonirritating and have the ability to withstand repeated use and, preferably, washing.

After the material has undergone strain in excess of 150% of its original dimension, it should rebound to preferably not more than 105% of its unstressed dimension and more preferably not more than 102% of the original dimension. This level of rebound should occur in not more than 5 minutes at ambient temperatures.

The plasticizer should have a high compatability with the resin, low pour point to maintain low-temperature flexibility and high boiling point, and be of high enough molecular weight to add tensile strength to the product at high plasticizer concentrations. The preferred plasticizer is dialkyl phthalate, available as Monsanto Santicizer 711 purchased from Chemcentral Co., Dallas, Texas. Other plasticizers that may be used include: diundecyl phthalate (DUP), dioctyl phthalate (DOP) and duisononyl phthalate (DINP).

The resin should be a high-tensile-strength resin that is compatible with high plasticizer resin ratios. The resin used in the preferred embodiment is a white, powdered polyvinylchloride resin, PVC 6422 from Occidental Chemical Co., Pottstown, PA. Other PVC resins that may be used include Bordon's PVC resin 1069. The resin and plasticizers used must be compatible.

The thixotropic thickening agent should be stable at high temperatures and must effectively thicken the undisturbed mixture at concentrations low enough to avoid deadening the final product. The preferred thixotropic thickening agent is silicon dioxide ($SiO_2$), also known as fumed silica, available from Cabot Corporation, Tuscola, IL., as Cab-O-Sil M5. Other suitable thixotropic thickening agents include clay materials treated with quaternary amines or organic thixotropic agents, such as caster oil derivatives or ethylene complexes.

Liquid stabilizers are preferred at high loading to provide lower melt-flow viscosity. The preferred stabilizer is barium zinc phenate, available as Synpron 940 from Synthetic Products, Cleveland, Ohio. Other stabilizers that may be used include calcium zinc and zinc tin stabilizers. The stabilizer allows the resin and plasticizer composition to be processed at elevated temperatures without degradation.

The preferred stabilizer enhancer is epoxidized soy-oil, available as Interstab Plastoflex 2307 from John Watson Company, Dallas, Texas. Other epoxidized soy-oil products that are effective stabilizer enhancers include Peraplex G-62 from Rohm & Haas. The stabilizer enhancer is used to increase the effectiveness of the stabilizer. Additional stabilizer can be used instead of the stabilizer enhancer.

The surfactant serves as a wetting agent and dispersing agent. The wetting agent breaks the surface tension of the liquids at the surface of the filler and substantionally eliminates the air pockets that would otherwise be trapped on the surface that would subsequently produce encapsulated air pockets in the final product. Additionally, the efficient dispersion of the filler allows for a fine textured lump-free final product. Lump and poor dispersion would weaken the final product. The preferred surfactant is Kelecin F, available from Spencer Kellogg Division of Textron Incorporated, Buffalo, N.Y. Other surfactants that can be used including Surfysol 104A and Nuosperse 657, available from Nuodex, Inc., Piscataway, N.J.

The weight-adding agent should be nontoxic and have a specific gravity of at least about 4. The preferred particulate weight adding agent is barium sulfate, in particular that sold as Superbar Macobar Corp., a division of Dresser Industries. The preferred embodiment is ground to a powder such that about 97% passes through a 74 μm (200 mesh) screen. Other weight adding agents that may be used, though less preferred, include lead oxide, iron oxide and metallic compounds. Barium sulfate is preferred because it is inexpensive and less abrasive on processing equipment than other metallic compounds.

The monomer should have low toxicity, have ease of concurrent polymerization with the processing of the resin and be a liquid when added to help lower viscosity. It should polymerize in the extruder. The preferred monomer is isodecyl methacrylate monomer, in particular that sold as Sartomer 242 from Arco Chemical Co., Newtown Square, PA. The monomer when polymerized preferably forms an elastomeric polymer, more preferably a homopolymer.

· The monomer may be polymerized using any catalyst reactive system which is useful at high temperatures. This may include radiation and chemical catalysts. Liquid catalysts are preferred as they are more easily dispersed in the mixture. Short half-life catalysts (having a half-life not greater than 3.5 min.) are preferred as they must act quickly during heating cycle of the extruder. The preferred monomer catalyst for use with isodecyl methacrylate is Lupersol 230 from Lucidol Penwalt, Buffalo, N.Y. Other catalysts should be compatible and effective with the selected monomer.

A coupling agent permits higher loading of the weight-adding agent in processable material by forming molecular bridges between the agent and the alkane chains of the phthalate plasticizer. The zirconate neoalkoxy is preferred to titanate neoalkoxy as the zirconium is an activator for peroxide and acts to accelerate the cure of the isodecyl methacrylate. More preferably the coupler for use with barium sulfate is LZ 38 from Kenrich Petrochemicals, Inc., Bayonne, N.J. Other couplers should be effective to reduce melt flow viscosity, permit higher weighting agent loading and better weighting agent dispersion.

The viscoelastic material of this invention is formed from at least about 85% plasticizer and weight-adding agent, the ratio of agent to plasticizer being at least about 3:1. Preferably a 6.35 cm $\times$ 1.91 cm $\times$ 1.27 cm (2-1/2 in. $\times$ 3/4 in. $\times$ 1/2 in.) sample of material undergoes a strain of at least 160% of its length under a stress of not more than 0.9072 kg (2 pounds) and rebounds to not more than 102% of its original length. A preferred material is formed from at least about 90% plasticizer, weight-adding agent and monomer. A more preferred viscoelastic material is formed from about 15 to about 45% plasticizer, about 2 to about 4% resin, about 40 to about 80% weighting agent, about 1 to about 4% monomer and monomer catalyst.

A more preferred viscoelastic material comprises from about 20 to about 35% plasticizer, about 3% resin, about 0.5% thixotropic thickening agent, about 0.2% stabilizer, about 0.2% stabilizer enhancer, about 0 to about 1% surfactant, about 0.5% couple, about 3% monomer, about 0.3% monomer catalyst, and about 75% weight-adding agent.

The method for producing the weighted viscoelastic material includes the steps of: mixing plasticizer with resin to form a plasticizer-resin mixture, mixing the monomer and monomer catalyst with the resin mixture, mixing the particulate weight-adding agent with the mixture, heating the mixture to the temperature at which the resin and the plasticizer form a homogeneous system and cooling the heated mixture to form a weighted viscoelastic material.

In a preferred process embodiment, an initial minor amount of plasticizer (normally in liquid form) and any stabilizers and enhancers which are to be employed therewith is mixed with the total amount of resin material to be employed in the batch, initially in an amount of about three parts by weight resin per part by weight plasticizer/stabilizer mixture. The resin, present in a white powder form, is thoroughly wetted by this liquid mixture. Next the mixture is stirred and heated to approximately 77°C (170°F). During the heating step additional plasticizer is added until there is approximately 1-1/2 times as much plasticizer as resin in the resin concentrate.

This temperature increase is preferable because the resin expands with heating and is thus better able to stay in suspension in the resin concentrate. A temperature of 77°C (170°F) is preferable in that after being heated to 77°C (170°F), the resin does not percipitate out of suspension, even after the concentrate formed is cooled, yet 77°C (170°F) is below the temperature at which the preferred resin-plasticizer system forms a gel. The temperature could be raised by conventional means, though the preferred method is to heat by the friction generated during the stirring. The friction-stirring heating helps to assure that the material is heated uniformly, and prevents over heated resin from gelling.

Air which has become incorporated during mixing is next removed, such as by drawing a vacuum on the concentrate. The deaeration step has two purposes. First, if heating is performed in a closed device, such as an extruder, it is important to remove air so that the pressure inside the device does not substantially increase as the temperature increases. Second, the final product is stronger and denser with less entrapped air.

The deaerated resin concentrate then is added to the major portion of plasticizer to be employed in the batch. Preferably additional plasticizer may be mixed with the resin concentrate. The preferred ratio of plasticizer to concentrate is about 4:1 by weight.

The resulting plasticizer-resin mixture is next combined with a weight-adding agent in a ratio of weight-adding agent to plasticizer-resin mixture of about 2:3 to 4:1. The material is heated to a temperature yielding the maximum strength in the final product, which is between 162.8°C (325°F) and 190.6°C (375°F) in the preferred phthalate-PVC resin system. The temperature to which the weighted mixture is heated affects the strength of the resulting product. The higher the temperature to which the mixture is heated, the stronger the resulting product. Other plasticizer-resin systems could be heated to 177°C (350°F) in an extruder without the need of a stabilizer or stabilizer enhancer. However, higher processing temperatures may be desirable to increase the strength of products made from such other systems, and stabilizers would thus be useful in such embodiments of the invention. The heated material is allowed to cool, either in molds of appropriate shape or in larger forms from which appropriate shapes are later cut.

Various other alternatives to this preferred procedure may also be used in making the composition and product of the present invention. For example, heating the weighted thixotrope can be accomplished by other procedures, such as by using a stirred heating vessel, which uniformly heats the thixotrope. Uniform heating is required to prevent part of the mixture from getting too hot and decomposing without sufficient heating of other parts of the mixture.

The following examples are provided, not to limit the invention, but rather to further aid one skilled in the art in understanding the process and the preferred method by which the weighted viscoelastic material of the present invention can be prepared.

## EXAMPLE 1

Approximately 124.74 kg (275 pounds) of the dialkyl phthalate plasticizer (Monsanto Stanticizer 711) is added to a 1135.6 l (300 gallon) mixing tank. To the plasticizer is added 14.97 kg (33 pounds) of epoxidized soybean-oil (Interstab Plastoflex 2307) and about 14.97 kg (33 pounds) of barium zinc phenate (Synpron 940). To this mixture is added 294.84 kg (650 pounds) of polyvinylchloride resin (PVC 6422).

The 1135.6 l (300 gallon) mixing, tank is fitted with a mixer and blade, and the blade is set to its lowest position, about 20.32 cm (8 inches) off the bottom of the tank, and is operated initially at a low speed (600 rpm). When all of the resin has been pulled beneath the surface of the plasticizer the mixer blade is raised to a position about 30.48 cm (12 inches) above the bottom of the tank and mixing is continued until all of the resin is wetted and the mixture is homogeneous. The mixer blade speed is then increased to approximately 1200 rpm. At this initial point in the mixing process the mixing motor ammeter reads approximately 20-24 amps. As the temperature of the mixture increases, the viscosity of the mixture decreases and the amperage of the mixer motor drops to about 16 amps. The temperature of the mixer is monitored carefully. At approximately 57.2°C (135°F) the viscosity starts to increase. Additional dialkyl phthalate is then added to the mixture to keep the viscosity low and maintain the mixer motor amperage at a load of about 20 amps. The dialkyl phthalate is added intermittently until the temperature of the mixture reaches 77-79.4°C (170-175°F), while the mixer is pulling about 20 amps. Throughout this mixing process the interior of the mixing tank are continuously scraped clean of resin with a long handed spatula. At no point in the process is the temperature of the mixture permitted to exceed 79.4°C (175°F). This avoids gelling the mixture. A total of 442.26 kg (975 pounds) (approximately 473.2 l (125 gallons) of dialkyl phthalate is added during the process. The resulting resin concentrate is a thin liquid which is pulled from the mixing tank through a screen and into a 1703.4 l (450 gallon) vacuum tank containing a ribbon blender.

Next a portion of the resulting thin plasticizer mixture is added to a mixer. To this is added the surfactant, coupler, monomer, catalyst and barium sulfate. The resulting mixture is mixed until substantially smooth. Then the thixotropic thickening agent is added and mixed. The resulting weighted thixotrope is pumped into a vacuum vessel where air is removed. The deaerated material is than heated to between 149 (300) and 177°C (350°F) and placed into molds.

### EXAMPLE 2

Three samples A, B and C were prepared having the compositions indicated in Table 1 below.

### TABLE 1

|  | A, % | B, % | C, % |
|---|---|---|---|
| Plasticizer | 45.0 | 22.5 | 19.2 |
| Resin | 4.0 | 2.0 | 2.5 |
| Thixotropic Thickening Agent | - | - | 0.2 |
| Stabilizer | 0.2 | 0.1 | 0.1 |
| Stabilizer Enhancer | 0.2 | 0.1 | 0.1 |
| Surfactant | - | - | 1.1 |
| Weight Adding Agent Coupler | - | - | 0.4 |
| Monomer | - | - | 2.4 |
| Monomer Catalyst | - | - | 0.02 |
| $BaSO_4$ | 50.0 | 75.0 | 74.0 |

The plasticizer was Santicizer 711, resin was PVC 6422, thixotropic agent was Cab-O-Sil M5, stabilizer was Synpron 940, stabilizer enhancer was Interstak Plastoflex 2307, surfactant was Nuoperse 657, monomer was Sartomer 242, monomer catalyst was Lupersol 230, and coupling agent was LZ-38.

Sample A is a commercially available weighted material having a ratio of weight-adding agent to other ingredients of 1:1. Sample B is Sample A except the ratio is increased to 3:1. Sample C is the composition of this invention. The strain results of applying a 0.9072 kg (2 pounds) of stress to a 6.35 cm $\times$ 1.91 cm $\times$ 1.27 cm (2-1/2 in. $\times$ 3/4 in. $\times$ 1/2 in.) portion of each sample is shown in Table 2. The rebound results after 1 minute for each stressed sample are also shown in Table 2.

### TABLE 2

| Sample | Strain, % | Rebound, % |
|---|---|---|
| A | 175 | 101 |
| B | 122 | 101 |
| C | 169 | 102 |

Samples A and C are shown to have very similar results. However, Sample B exhibits a very tough nonelastic material. Sample A has a specific gravity of 1.58 and Sample C has a specific gravity of 2.32. Thus, it is shown that an improved heavier weight material is prepared in accordance with this invention.

While the invention has been described above with respect to its preferred embodiments and Examples, it will be understood that the invention is capable of numerous rearrangements, modifications and alterations and all such arrangements, modifications and alterations are intended to be within the scope of the appended claims.

**Claims**

1. A viscoelastic composition formed of at least about 85% plasticizer and weight-adding agent, the ratio of agent to plasticizer being at least about 3:1.

2. The composition of claim 1 formed of at least 90% monomer, plasticizer, and weight-adding agent.

3. The composition of claim 1 or 2 formed of about 15 to about 45% plasticizer, about 2 to about 4% resin, about 40 to about 80% weighting agent, about 1 to about 4% monomer and monomer catalyst.

4. The composition of claim 2 formed of about 15 to about 45 percent plasticizer, about 2 to 4 percent resin, about 0.03 to about 1.0 percent thixotropic thickening agent, about 0.1 to about 0.25 percent stabilizer, about 0.1 to about 0.25 percent stabilizer enhancer, about 0 to about 2 percent surfactant, about 0.3 to about 0.6 percent weighting agent coupler, about 2 to about 4 percent monomer, about 0.001 to about 0.08 percent monomer catalyst, about 40 to about 80 percent particulate weight-adding agent in ratio of weight adding agent to plasticizer of at least about 3:1.

5. The composition of claim 4 in which the weight-adding agent is substantially homogenously dispersed.

6. The composition of one of the preceding claims wherein said plasticizer comprises dialkyl phthalate and said resin comprises polyvinylchloride.

7. The composition of one of the preceding claims wherein said weight-adding agent comprises barium sulfate.

8. The composition of one of claims 1 to 6 wherein said weight-adding agent comprises iron oxide.

9. The composition of one of the preceding claims wherein the weight-adding agent has a particle size such that substantially all of the weight-adding agent will pass through a 74 μm (200 mesh) screen.

10. The composition of one of claims 4 to 9 wherein the thixotropic thickening agent comprises fumed silica.

11. A viscoelastic weight formed of a composition of one of the preceding claims.

12. The weight of claim 11 formed in a generally annular shape capable of elastically stretching to the extent necessary for the weight to slip over a hand or a foot and remain in place on an adjoining wrist or ankle during exercise movement.

13. The weight of claim 11 formed in a generally cylindrical shape and further comprises a strap attached near each end of the cylinder.

14. The weight of claim 12 or 13 wherein the weight comprises a cover.

15. The weight of claim 14 wherein said cover comprises an absorbent material.

European Patent
Office

**EUROPEAN SEARCH REPORT**

Application Number

EP 87 11 4291

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 424 270 (S. HARTMAN et al.) * Claim 1; column 2, lines 4-29 * | 1,2,6-9 | C 08 J 3/18 A 63 B 21/18 |
| Y |  | 1,2,6-9 ,11-14 |  |
| Y | WO-A-8 301 201 (ELECTIC PRODUCTS, INC.) * Claims * | 1,2,6-9 ,11-14 |  |
| Y | US-A-3 490 766 (H.L. GARDNER) * Whole document * | 1,2,6-9 ,11-14 |  |
| A | US-A-4 525 234 (J. HEROLD et al.) * Example 1; column 3, line 62 - column 4, line 2 * | 1-5,10 |  |
| P,A | US-A-4 621 808 (L.P. ORCHARD et al.) |  |  |

TECHNICAL FIELDS
SEARCHED (Int. Cl.4)

A 63 B
C 08 K
C 08 J

The present search report has been drawn up for all claims

| Place of search | Date of completion of the search | Examiner |
|---|---|---|
| THE HAGUE | 29-01-1988 | HALLEMEESCH A.D. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)